(19) Europäisches Patentamt
European Patent Office
Office européen des brevets

(11) **EP 4 209 261 A1**

(12) **EUROPEAN PATENT APPLICATION**

(43) Date of publication:
**12.07.2023 Bulletin 2023/28**

(21) Application number: **22150541.5**

(22) Date of filing: **07.01.2022**

(51) International Patent Classification (IPC):
**B01D 61/36** (2006.01) **B01D 67/00** (2006.01)
**B01D 69/02** (2006.01) **B01D 69/12** (2006.01)
**B01D 71/70** (2006.01) **C02F 1/44** (2023.01)

(52) Cooperative Patent Classification (CPC):
**B01D 69/125; B01D 61/364; B01D 67/0006;**
**B01D 69/02; B01D 71/70; C02F 1/447;**
B01D 2323/40; B01D 2325/38

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**
Designated Extension States:
**BA ME**
Designated Validation States:
**KH MA MD TN**

(71) Applicant: **Max-Planck-Gesellschaft zur**
**Förderung der**
**Wissenschaften e.V.**
**80539 München (DE)**

(72) Inventors:
• **BUTT, Hans-Jürgen**
**55128 Mainz (DE)**
• **KAPPL, Michael**
**55128 Mainz (DE)**
• **HOU, Youmin**
**55128 Mainz (DE)**

(74) Representative: **v. Bezold & Partner Patentanwälte**
**- PartG mbB**
**Ridlerstraße 57**
**80339 München (DE)**

(54) **NANOFILAMENT-COATED MEMBRANES WITH HIERARCHICAL POROUS STRUCTURES, IN PARTICULAR FOR MEMBRANE DISTILLATION, AND METHODS FOR PREPARING THE SAME**

(57)    The invention relates to nanofilament-coated membranes with hierarchical porous structures comprising a microporous polymer support membrane having through-going pores with a nominal pore diameter in the range from 0.2 $\mu$m to 50 $\mu$m and a superhydrophobic fluorine-free nanoporous layer having through-going pores with a nominal pore diameter in the range from 5 nm to 200 nm provided on said support membrane and comprising or consisting of a porous network of polysiloxane nanofilaments.

In more specific embodiments of said nanofilament-coated porous membranes, the microporous support membrane comprises or consists of a polymer which is selected from the group consisting of polyethersulfone (PES), cellulose acetate (CA), polypropylene (PP), polyamide (nylon), polytetrafluoroethylene (PTFE), polyvinyl difluoride (PVDF) or polyethylene (PE).

A second aspect of the invention relates to the use of these nanofilament-coated porous membranes for membrane distillation, in particular in a process of desalination of saline or distillation of contaminated water or extraction of water from waste water or extraction of other volatile components from a feed solution and to a device, in particular a membrane distillation device, comprising these nanofilament-coated porous membranes.

A further aspect of the invention relates to a method for preparing these nanofilament-coated porous membranes.

**EP 4 209 261 A1**

**Description**

Background of the invention

Addressing the problem of water scarcity, which currently affects every continent and some 3 billion people around the world, is one of the greatest challenges in this century. Desalination, which separates fresh water from saline or contaminated water, proves to be one of the most promising methods to ease the pressure on global water shortages. As a hybrid thermal/membrane desalination technology, membrane distillation (MD) has recently gained much attention given its simple separation mechanism operating at low temperatures and pressure (see, e.g., Gonzalez and Suarez (2017), Renewable and Sustainable Energy Reviews 80, 238-259; Ali et al. (2018), Renewable and Sustainable Energy Reviews 81, 1-21; Desmukk et al. (2018), Energy & Environmental Science 11, 1177-1196).

Desalination by the MD process is based on the use of hydrophobic membranes, which contact the heated saline water (normally at 50 to 80 °C) at the feed side. Driven by the temperature difference across the membrane, water evaporates at the membrane-saline interface, diffuses through the pores of the membrane and condenses on the opposite side (normally at ~20 °C). Due to its intrinsic water repellency, the hydrophobic membrane prevents the saline water from passing through while allowing for vapor transport. Thus, it separates the volatile (i.e., water) and nonvolatile species (i.e., salts) in the hot saline. As the MD process operates at much lower hydraulic pressures than reverse osmosis, and requires less complicated components than multiple-effect distillation, it is highly advantageous for small-scale, simple process-designed desalination facilities. MD also allows water recovery from highly concentrated brines, where reverse osmosis would require too high pressures to be practicably feasible. This includes applications apart from desalination, such wastewater treatment for water recovery, removal of key contaminants from aqueous solutions, or recovery of value-added products (Hussain et al. (2021), Emergent Materials; https://doi.org/10.1007/s42247-020-00152-8).

Despite intensive efforts, widespread adoption of MD is still hindered by the lack of durable hydrophobic membranes with a high distillation capacity. Theoretically, distillation flux *J* of a MD membrane can be expressed as a function of the membrane properties and partial vapor pressure difference ($\Delta p$) across the membrane:

$$J \sim \frac{\varepsilon \mathcal{D}_{\mathrm{m}}}{\tau \sigma RT \left(1 + \frac{\mathcal{D}_{\mathrm{m}}}{\mathcal{D}_{\mathrm{K}}}\right)} \Delta p \qquad (1)$$

where $\varepsilon$, $\tau$, and $\sigma$ are the membrane porosity, tortuosity, and thickness respectively; R is the universal gas constant; *T* is the mean membrane temperature; $\mathcal{D}_{\mathrm{m}}$ is the molecular diffusion coefficient of vapor in air; $\mathcal{D}_{\mathrm{K}}$ is the Knudsen diffusion coefficient of vapor inside the membrane. At a fixed temperature, the ratio of the diffusion coefficient $(\mathcal{D}_{\mathrm{m}}/\mathcal{D}_{\mathrm{K}})$ is inversely proportional to the nominal pore diameter ($d_{\mathrm{n}}$) of the membrane. Therefore, a highly porous membrane with large pores will maximize the distillation flux.

Durable MD desalination with a high level of salt rejection necessitates excellent membrane wetting resistance, in order to prevent infiltration of salty water into the membrane. The wetting resistance of a membrane is usually assessed quantitatively by the liquid entry pressure (LEP), which is defined as the minimum required pressure for liquid solution entering the membrane pores. In a simple form based on the Young-Laplace equation, it can be calculated as LEP ~ $(-4\gamma \cos \theta_{\gamma})/d_{\mathrm{max}}$, where $d_{\mathrm{max}}$ is the maximum membrane pore diameter, y is liquid surface tension, and $\theta_{\gamma}$ is the contact angle of the membrane material. Accordingly, membranes with small pore size, narrow pore size distribution, and low surface energy typically show high LEP and excellent salt rejection.

These requirements of both high distillation flux and LEP for MD membranes pose a critical challenge when designing a membrane - large membrane pore size allows efficient distillation, and yet it inevitably increases the susceptibility to liquid penetration. To ensure stable desalination without risk of wetting, the nominal pore diameters of state-of-the-art membranes are typically less than 0.2 $\mu$m, which greatly reduce desalination efficiency. In order to balance the conflicting requirements of distillation flux and LEP, conceptual designs of composite membranes with different pore sizes have been proposed over the past years (Desmukk et al. (2018) ibid; Jiang et al. (2020), ACS Nano 14, 17376-17386), but fabrication of such membranes often involve multiple processing steps and use of fluorination agents, which pose environmental risks.

Therefore, to date, it still remains a challenge to produce a scalable polymeric membrane that can simultaneously enhance distillation flux and wetting resistance via a simple processing method.

In view of this situation, a main objective underlying the present invention is the provision of improved means for membrane distillation which overcome or considerably alleviate the drawbacks of the prior art, in particular in that they achieve a higher distillation flux and thermal efficiency of desalination than materials and methods of the prior art, are eco-friendly and can be a manufactured/used in a relatively simple and cost-efficient manner.

This main objective is achieved according to the present invention by providing the nanofilament coated membranes according to claim 1, the method for preparing the same according to claim 5 and the device according to claim 10. Additional aspects and preferred embodiments of the invention are the subject of further claims.

Description of the invention

The present inventors developed a fluorine-free superhydrophobic membrane by coating a thin layer of nanofilament network onto the top of a micro-porous membrane matrix, which combines the advantages of multi-scale porous structures. This hierarchical topography greatly enhances the LEP of the membrane while retaining a high vapor transfer rate. Under standard desalinating conditions, the nanofilament-coated membrane demonstrated 60% higher distillation flux than that of commercial state-of-the-art membranes. Concurrently, the thermal efficiency of desalination was improved from 84% to 93%. Owing to its non-toxic hydrophobic nature and potential for scalable manufacturing, this advanced composite membrane offers an avenue to affordable clean water for the off-grid communities by using low-grade energy.

The nanofilament-coated membrane with hierarchical porous structures according to the present invention comprises

- a microporous polymer support membrane having through-going pores with a nominal pore diameter in the range from 0.2 $\mu$m to 50 $\mu$m, preferably 1 $\mu$m to 10 $\mu$m
- a superhydrophobic fluorine-free nanoporous layer having through-going pores with a nominal pore diameter in the range from 5 nm to 200 nm, preferably 10 nm to 100 nm provided on said support membrane and comprising or consisting of a porous network of polysiloxane nanofilaments.

Principally, the microporous polymer support membrane in said nanofilament-coated membrane is not especially limited and may be any microporous polymer membrane known in the art and in particular any microporous polymer membrane used for membrane distillation.

More specifically, the microporous support membrane comprises or consists of a polymer which is selected from the group consisting of polyethersulfone (PES), cellulose acetate (CA), polypropylene (PP), polyamide (nylon), polytetrafluoroethylene (PTFE), polyvinyl difluoride (PVDF) or polyethylene (PE).

Typically, the nanofilament-coated membrane of the invention has an apparent receding contact angle $\theta_r^{app}$ for water of more than 150°, measured at room temperature, and a roll off angle of less than 10° even after being immersed in hot water of 80°C for 48 h.

The nanofilament-coated membrane of the invention advantageously exhibits a liquid entry pressure LEP of at least 2 bar, preferably at least 5 bar.

A second aspect of the invention relates to methods for preparing the nanofilament-coated porous membrane as described above.

Such a method generally comprises at least the following steps:

- treatment of a microporous polymer membrane with oxygen plasma or by an oxidizing solution, e.g. Fenton's reagent, to activate the polymer surface
- immersion of the microporous polymer membrane in a reaction medium comprising trichloromethylsilane or triethoxysilane and trace amounts of water, i.e. 100 ppm to saturation concentration, in an organic solvent, e.g. toluene or a mixture of n-heptane and toluene or other organic solvents for trichloromethylsilane or triethoxysilane that can accommodate above trace amounts of water
- hydrolysis of trichloromethylsilane or triethoxysilane and generation of silanol functional groups
- formation of polysiloxane nanofilaments on said membrane surface due to condensation reactions of said silanol functional groups with each other and with hydroxyl groups on the membrane surface, and
- self-assembling of polysiloxane nanofilaments resulting in a porous network of said polysiloxane nanofilaments.

In a specific embodiment thereof, the solvent is a mixture of n-heptane and toluene (for example a 1:1 mixture) and the formation and self-assembling of nanofilaments is completed within a predetermined period of time, typically in the range from 10 min to 12 h.

As already indicated above, the nanofilament-coated membrane according to the present invention is especially suited for uses/applications in the field of membrane distillation.

More specifically, the nanofilament-coated membrane may be used in, e.g., a process of desalination of saline or distillation of contaminated water or extraction of water from waste water or extraction of other volatile components from a feed solution.

A closely related aspect of the present invention, therefore, relates to a method for extraction of a volatile component from a feed solution, e.g. a saline aqueous medium, which comprises at least the following steps:

- providing a nanofilament-coated porous membrane as defined above,
- contacting said membrane with a feed solution comprising a volatile component, e.g. saline, at a predetermined elevated temperature resulting in the evaporation and permeation of the volatile component, e.g. water molecules, through said nanofilament-coated porous membrane,
- condensing the permeated molecules at the opposite side of the membrane, wherein the condensation may occur directly into a stream of permeate contacting the membrane or onto a condensing surface having a predetermined low target temperature and being arranged opposite to said nanofilament-coated porous membrane in a predetermined distance, and
- collecting the condensed permeate.

A still further aspect of the present invention relates to a device, in particular a membrane distillation device, comprising the nanofilament-coated porous membrane as defined above.

Principally, the construction of the membrane distillation device according to the present invention is not especially limited and may be based on any membrane distillation system known in the art.

In a specific embodiment, said membrane-distillation device of the invention further comprises at least the following components:

- a supply compartment for receiving an aqueous supply medium with volatile components, e.g. water, and non-volatile compounds, e.g. salts, which is in contact with one surface of the nanofilament-coated porous membrane,
- means for heating and maintaining the medium within the supply compartment at an elevated target temperature,
- a condensing surface maintained at a predetermined target temperature below the temperature of the supply compartment and arranged in a predetermined distance from that surface of the nanofilament-coated porous membrane which is not in contact with the supply compartment,
- means for cooling and maintaining the condensing surface at the target temperature, and
- means for collecting the distillate, i.e. any volatile components of the supply medium which have permeated the nanofilament-coated porous membrane and condensed at the condensing surface.

Brief Description of the Figures

Fig. 1 shows the morphology of a superhydrophobic hierarchical porous membrane based on a polyethersulfone membrane with nominal pore size of 8 $\mu$m (PES-8): Scanning electron microscopy (SEM) images of pristine PES-8 membrane (A, B) and nanofilament-coated PES-8 membrane (C, D) at different magnifications; (E, F) SEM images showing the cross section of the nanofilament-coated PES-8 membrane with hierarchical porous structures. Arrows in (E) denote the nano-porous outer layer on top of micro-porous membrane.

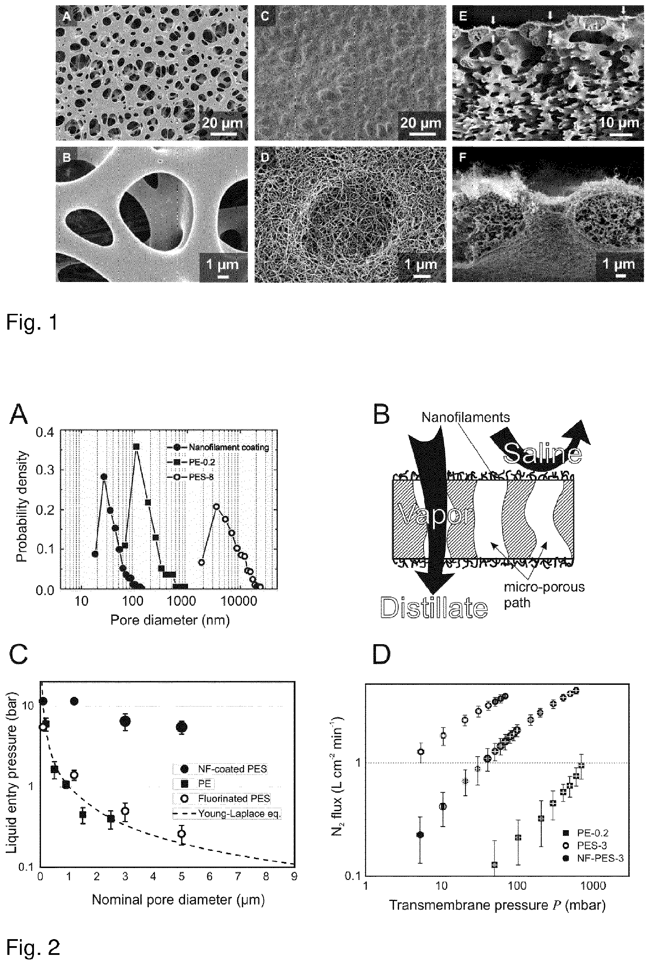

Fig. 2 shows enhanced LEP and gas permeability resulting from hierarchical membrane topography. (A) Pore size distribution of the nanofilaments coating, pristine PES-8 and PE-0.2 (polyethylene membrane with 0.2 $\mu$m nominal pore size) membranes. (B) Schematic of the nanofilament-coated membrane showing the concurrent enhancement of wetting resistance and vapor permeability. (C) Liquid entry pressure of water as a function of nominal pore diameter for the nanofilament-coated PES, pristine PE, and fluorinated PES membranes. (D) Nitrogen gas permeation flux as a function of transmembrane pressure difference for nanofilament-coated PES-8, pristine PE-0.2, and pristine PES-8 membranes.

Fig. 3 shows the durability of liquid repellency for the nanofilament-coated membrane. (A) receding contact angle and (B) contact angle hysteresis of water on the PE, PTFE and nanofilament-coated PES membrane surface as a function of immersion time in Milli-Q water at 80°C.

Fig.4 shows snapshots comparing the mobility of dyed water droplets on the nanofilament-coated PES-8 (C) and PE-0.2 (D) membrane surface before and after 48-hour hot water immersion.

Fig. 5 schematically shows an exemplary membrane distillation device of the invention. (A) Schematic of an air gap membrane distillation (AGMD) testing system. (B) 3D schematic view of the design of the AGMD module.

Fig. 6 shows the desalination performance of nanofilament-coated PES-membranes. (A) Experimental steady state distillation flux as a function of distillate conductivity for the nanofilament-coated PES, commercial PE and PTFE membranes. (B) Experimental steady state distillation flux as a function of feed water temperature for NF-PES-8, NF-PES-3 and PE-0.2 membranes.

Fig. 7 shows a comparison of the energy performance of different membranes in MD testing: Time evolution of thermal efficiency for the NF-PES-8, PE-0.2 and PTFE-0.2 membranes in 12-hour AGMD desalination.

Fig. 8 shows a comparison of key properties of nanofilament-coated PES membranes (white and patterned symbols) and commercially available membranes (black symbols).

The following Examples are provided to illustrate the present invention in more detail, however, without limiting the same to the specific conditions and parameters thereof.

EXAMPLE 1

*Preparation of nanofilament-coated microporous polyethersulfone membranes*

To fabricate a high-performance composite membrane as required by MD desalination, a superhydrophobic nano-porous layer was coated onto a micro-porous polyethersulfone (PES) membrane as follows. This commercially available 130-$\mu$m-thick PES membrane with nominal pore diameter ($d_n$) of 8 $\mu$m (in the following denoted as PES-8) (Fig. 1A, 1B) acts as a robust supporting framework due to its toughness, good thermal resistance, and relatively high porosity (~75 to 80 %). To create the nano-porous layer, the membrane (64 mm $\times$ 75 mm) was immersed in a mixture of n-heptane and toluene (volumetric ratio 1:1), which contains trichloromethylsilane and trace amounts of water (150 ppm). The hydrolyzed trichloromethylsilane in solvent reacted with the hydroxyl groups on the membrane surface and self-assembled into a porous network of polysiloxane nanofilaments. The nanofilaments covered the whole outer surface of the PES membrane, including the large opening pores (Fig. 1C, 1D). The interwoven structure of nanofilaments resulted in an overhanging morphology with an inward curvature. Due to the exposed methyl groups on the surface, the nanofilaments exhibited low surface energy. This combination of overhang structural topography with low surface energy renders the nanofilament network coating stable and superhydrophobic, even without using any fluorine-containing reagents.

Detailed Experimental Procedures

**Fabrication of the nanofilament-coated membranes**

PES membranes, purchased from Sterlitech Corp., USA, were activated by using $O_2$ plasma (2 min, 90W, Diener Electronic Femto). The $O_2$ flow rate was set to 7 ml/min. 0.6 ml of trichloromethylsilane (TCMS) was added to 300 ml of a 1:1 (volumetric) mixture of *n*-heptane and toluene. Before mixing, a trace amount of water was added to n-heptane and toluene. The water concentration of n-heptane and toluene was measured as 90 ppm and 275 ppm, respectively. Then the plasma activated PES membranes were immersed in the reaction solution for nanofilament growth. After 6 hours, the nanofilament-coated PES membranes were rinsed with n-hexane and dried using $N_2$ flow.

**Fluorination of hydrophilic PES membranes**

For comparison, the originally hydrophilic PES membranes were hydrophobized by using surface fluorination with 1H,1H,2H,2H-perfluorodecyltrichlorosilane (PFDTS). PES membranes were activated using $O_2$ plasma treatment (2 min, 90 W, Diener Electronic Femto) at a $O_2$ flow rate of 7 ml/min. Subsequently, PFDTS (180 $\mu$L, Alfa Aesar) was mixed with n-hexane (350 mL) and the activated membranes were immersed in the solution for 60 min, rinsed with n-hexane and dried under a nitrogen gas flow.

EXAMPLE 2

*Characterization of nanofilament-coated microporous PES membranes*

In order to characterize and evaluate the physical properties of the nanofilament-coated porous membranes prepared according to Example 1 above, the commercial polyethylene and polytetrafluroethylene micro-porous membranes were selected as the benchmarks for comparison and the properties of all tested membranes are indicated in Table 1 below.

Topography

SEM images of cross-sections (Fig. 1E and 1F) elaborated the dual-layer topography of the nanofilament-coated PES membrane with multi-scale pore sizes. The coated nanofilaments spontaneously intertwined and formed a dense nano-porous layer on top of the microporous membrane matrix (highlighted by arrows in Fig. 1E). At the same time, the nanofilaments also grew inside the membranes and converted the interior surface into a superhydrophobic surface (Fig. IF). The inner coating, however, was sufficiently thin so that the geometry of the inner micro-pores remained almost unchanged, offering a high membrane permeability for water vapor transport.

To analyze the effective pore diameter of a nanofilament network coating, the geometrical features were evaluated based on the computer analysis of SEM images (Fig. 2A). The analysis algorithm was first validated through measurements of a pristine PES-8 membrane and a commercial polyethylene membrane with a nominal pore diameter of 0.2 $\mu$m (denoted as PE-0.2). From the image analysis, the obtained mean pore diameters of the PE-0.2 and PES-8 membranes closely matched the product data, confirming the reliability of the measurements. The computer image analysis revealed that the pore diameter of the nanofilament coating was distributed between 10 to 100 nm. Compared to the commercial membranes, the nano-porous coating resulted in not only a smaller pore size, but much higher surface roughness, which would substantially increase the liquid entry pressure of coated membranes according to the Young-Laplace equation.

Liquid entry pressure and gas permeability

Desalination performance using the MD process relies essentially on the liquid entry pressure (LEP) and gas permeability of the adopted membrane: the LEP highly affects the salt rejection and the gas permeability dominates the distillate flux. To quantitatively explore the improved wetting resistance of hierarchical membranes, the LEP of nanofilament-coated PES membranes was benchmarked against commercial PE membranes and PES membranes that were rendered hydrophobic by fluorination. The testing was carried out in a custom-made setup which can ramp up the transmembrane pressure difference (see Detailed Experimental Procedures). For convenient description here, NF-PES-0.1 to NF-PES-8 are used to denote the nanofilament-coated PES membranes with nominal pore diameter ($d_n$) ranging from 0.1 to 8 $\mu$m; PE-0.2 to PE-2.5 are used to denote the PE membranes with $d_n$ ranging from 0.2 to 2.5 $\mu$m.

For the membranes with single-scale porous geometry (e.g., PE and fluorinated PES membranes), the LEP values drop sharply with the increasing $d_n$ (Fig. 2C), which agrees well with the estimation of the Young-Laplace equation when regarding $d_{max} = d_n$ (due to the low deviation of pore size for commercial membranes). In a practical MD process, the transmembrane pressure difference normally ranges between 0.3 to 1.5 bar according to different operating pressures on the side where permeate is collected. To ensure the sufficient safety margin of LEP, the $d_n$ of MD membranes in pilot scale testing is typically between 0.1 and 0.5 $\mu$m.

The present inventors found a greatly enhanced LEP for nanofilament-coated PES membranes, as the nano-porous outer layer withstands high capillary pressure. Note that NF-PES-0.1 and NF-PES-1.2 membranes exhibited an extremely high LEP, which even exceeded the limit of our testing setup (11.5 bar). However, when the pore size of PES membranes is considerably larger (e.g., $d_n > 3$ $\mu$m), the LEP of the nanofilament-coated membrane gradually goes down with the increasing pore size of matrix. The decline of LEP can be related to the imperfect growth of the nano-porous layer on the big membrane pores as it is difficult to cover the large openings completely with a nanofilament network. Nevertheless, the effective pore diameter of the NF-PES-3, NF-PES-5, and NF-PES-8 membranes were still smaller than 0.3 $\mu$m according to the theoretical estimation of the Young-Laplace model. Compared to the fluorinated PES membrane with the same pore diameter, the nanofilament-coated PES membranes raised the LEP by at least 16 fold. Considering the hydraulic pressure in the MD system, LEPs of all the nanofilament-coated PES membranes were well above the safety threshold, indicating their applicability in desalination.

To evaluate the membrane resistance to vapor transport, the gas permeation of PE and nanofilament-coated PES membranes under differing transmembrane pressures (see Detailed Experimental Procedures) was characterized. A linear dependence between gas permeation flux and transmembrane pressure difference was observed for both single-scale and multi-scale porous membranes (Fig. 2D). After coating with nanofilaments, the gas permeation flux of the NF-PES-8 membrane decreased by ~55% when compared to the uncoated one. Although the mass transfer barrier induced by the nano-porous outer layer is obvious, the large micro-porous paths inside the nanofilament-coated membrane guarantee an improvement in the overall gas permeability. The measurements demonstrated that the gas permeation flux of NF-PES-8 membrane was nearly 10 times above that of a commercial PE-0.2 membrane. Given the enhanced LEP shown above, the nanofilament-coated PES membranes successfully resolve the conflict in conventional MD membrane design. The concurrent enhancements of gas permeability and liquid wetting resistance demonstrate the superior performance of the present nanofilament-coated membrane compared to those reported previously (Seo et al. (2018), Nature Communications 9, 683; Wang et al. (2016), Environmental Science & Technology 50, 3866-3874; Deng et al. (2020), Journal of Membrane Science 598, 117813; Sun et al., (2019). Advanced Functional Materials 29, 1903125).

Durability

During MD desalination, membranes need to remain in contact with hot water for hours or days, which may affect the physical properties and surface chemistry of membranes. To evaluate possible degradation of membrane surfaces, polytetrafluroethylene (PTFE), PE, and nanofilament-coated PES-8 membranes were immersed in Milli-Q water at 80 °C for 3 to 48 hours. After drying the tested membranes under a nitrogen stream, the apparent receding contact angle $\theta_r^{app}$ for water and the contact angle hysteresis $\theta_{CAH}$ on the membrane surfaces was measured.

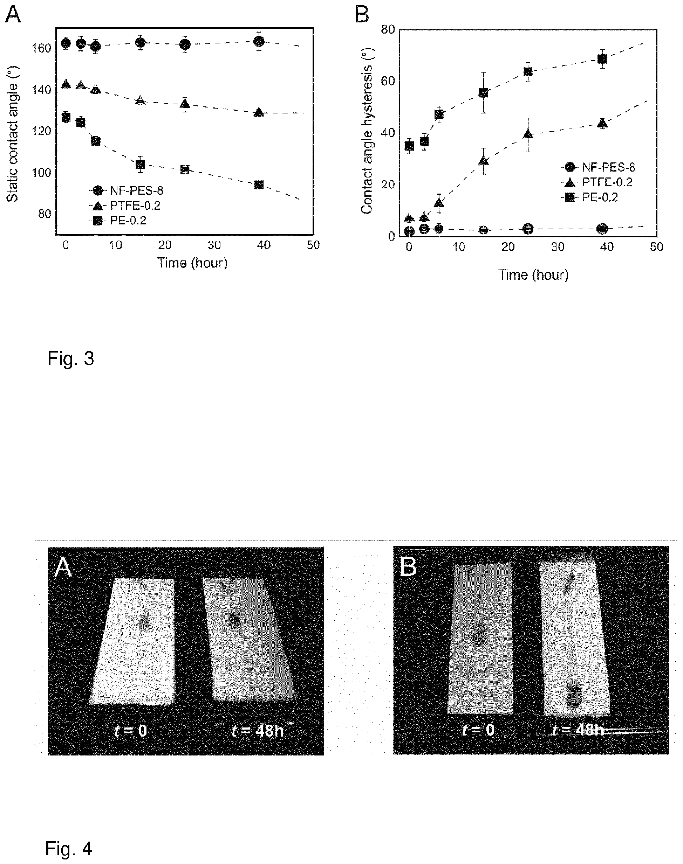

During the 48-hour hot immersion test, NF-PES-8 membranes maintained their super liquid-repellency with $\theta_r^{app}$ always greater than 155° and $\theta_{CAH}$ less than 5° (Fig. 3A, 3B). The snapshots in Fig. 4A present the droplet mobility on a NF-PES-8 membrane before and after the immersion test, respectively. Even when the NF-PES-8 membrane was immersed in hot water for 48 hours, water droplets still rolled off the surface rapidly, as was the case before the immersion test. This demonstrates the durable surface properties of nanofilament-coated membranes in long-term applications.

In contrast to this, the commercial PE and PTFE membranes showed significant deterioration.

After being immersed in hot water for 48 hours, $\theta_r^{app}$ on PE membranes declined from ~88° to ~24° and $\theta_{CAH}$ increased from ~35° to ~75°, indicating a considerable loss of liquid-repellency. Snapshots in Fig. 4B reflect the degradation of PE membranes after the immersion test. The water droplet was repelled on the original PE membrane, but it easily wetted and stained the membrane that was immersed for 48 hours. The degradation of the PE membrane can be attributed to the accelerated polymer oxidation in hot water, which generates polar groups on the PE surface and thus increases the surface energy.

The hydrophobicity also decreased on commercial PTFE membranes, although PTFE is widely considered to be thermally stable. After 48 hours in hot water, the $\theta_r^{app}$ on PTFE membranes decreased from ~130° to ~96° and $\theta_{CAH}$ increased from ~20° to ~50°. Based on previous studies of PTFE polymer and membranes, the inventors assume that the increasing hydrophilicity is mainly caused by the change in surface structure and polymer crystallinity at elevated temperatures. In the case of commercial micro-porous membranes, the loss of surface hydrophobicity could cause a gradual infiltration of liquid into membranes, decrease desalination efficiency, and even cause the contamination of the distillate by salty water.

The durable superhydrophobicity of NF-PES-8 membranes indicates that by reducing the wetted area on membrane surface, there is an effective way of retarding the polymer degradation in hot water. The fraction of the water contact area on membrane surfaces was estimated by analyzing the receding contact angle. For superhydrophobic arrays of cylindrical micropillars, the apparent receding contact angle $(\theta_r^{app})$ can be expressed as

$$\cos\frac{\theta_r^{app}}{2} \approx (\pi\varphi_{ls})^{1/2}\sin\theta_r \qquad (2)$$

Here, $\theta_r$ is the receding contact angle for water on a flat surface of same material as the membrane. The wetted area $\varphi_{ls} = A_{ls}/A_w$ is the ratio of the projected area of liquidsolid interface ($A_{ls}$) to the projected area of total wetted region ($A_w$), and $\varphi_{lv} = 1 - \varphi_{ls}$ is the fractional area of the liquid-vapor interface.

By adopting such a specific geometrical model in eq. 2, the wetted area fractions on PE and NF-PES-8 membranes were estimated to be ~20% and ~1.5% at the beginning of the immersion test, respectively. An alternative approach is to take the liquid droplet in global thermodynamic equilibrium and apply the Cassie-Baxter equation to estimate the $\varphi_{ls}$ surface fraction. In this case, the predicted $\varphi_{ls}$ for PE and NF-PES-8 membranes were ~40% and ~5%, respectively. Whatever the approach, the extremely small wetted area $\varphi_{ls}$ on the NF-PES-8 membrane explains its long-term thermal stability in the immersion test, and also implies a higher energy efficiency in desalination. This is because the heat loss by conduction between hot water and the membrane is greatly suppressed. The nanofilament coating also increases the water evaporation area on the membrane surface due to its superhydrophobic nature. As indicated by the

measured $\theta_r^{app}$, the NF-PES-8 membrane kept a large fractional area of liquid-vapor interface with $\varphi_{lv}$ = ~98.5% throughout the 48-hour test. In the theoretical analysis of the MD process, $\varphi_{lv}$ is practically equivalent to the surface porosity ($\varepsilon$). Therefore, from Eq. 1 distillation flux ($J$) is proportional to $\varphi_{lv}$, i.e., the large $\varphi_{lv}$ on the NF-PES-8 membrane would lead to a substantial increase in the overall production of distillate.

**Table** 1. Characteristics of commercial membranes and nanofilament-coated PES membranes

| ID | Material | Nominal pore diameter ($\mu$m) | Liquid entry pressure (bar) | Receding contact angle (°) | Contact angle hysteresis (°) |
|---|---|---|---|---|---|
| PE-0.2 | | 0.2 | 6± 1.1 | 88 ± 3 | 35 ± 3 |
| PE-0.5 | | 0.5 | 1.65 ± 0.4 | 92 ± 2 | 41 ± 3 |
| PE-0.9 | PE | 0.9 | 1.07 ± 0.12 | 92 ± 3 | 32 ± 4 |
| PE-1.5 | | 1.5 | 0.45 ± 0.1 | 85 ± 3 | 35 ± 3 |
| PE-2.5 | | 2.5 | 0.4 ± 0.1 | 86 ± 2 | 39 ± 4 |
| PTFE-0.1 | PTFE | 0.1 | 6.5 ± 0.55 | 130 ± 2 | 19 ± 3 |
| PTFE-0.2 | | 0.2 | 5.05 ± 0.7 | 132 ± 1 | 17 ± 2 |
| NF-PES-0.1 | | 0.1 | >11.5 | 161 ± 3 | 2 ± 1 |
| NF-PES-1.2 | Nanofilament-coated PES | 1.2 | >11.5 | 159 ± 3 | 3 ± 1 |
| NF-PES-3 | | 3 | 6.5 ± 1.5 | 157 ± 2 | 4 ± 1 |
| NF-PES-5 | | 5 | 5.5 ± 1 | 158 ± 3 | 2 ± 1 |
| NF-PES-8 | | 8 | 5 ± 0.8 | 160 ± 4 | 3 ± 2 |

Detailed Experimental Procedures

***Contact angle measurements***

The water contact angles of all membranes (PE, PTFE, fluorinated PES and nanofilament-coated PES membranes) were measured to characterize the surface wettability. Contact angle and contact angle hysteresis of a water droplet were measured using a DataPhysics OCA35 goniometer. During the measurement, a 5 $\mu$l droplet was deposited on the membrane surface, and afterward 20 $\mu$l of water was added to and then removed from the droplet. The measurement was consecutively repeated three times at the same position, and at three different positions per substrate. The error of the advancing and receding contact angle measurements was estimated to be ±2°.

***Liquid entry pressure (LEP) measurements***

To measure the LEP of membranes, a custom-designed apparatus was built. The tested membrane was mounted inside a filter holder, which connected to a syringe pump. By slowly pumping the salty water into the filter holder (0.1 mL/min), the hydrostatic pressure applied on the tested membrane gradually increased. The hydrostatic pressure was monitored using a pressure sensor (IPSLU-M12, RS-Pro) and the data was recorded using a data acquisition system (PCI 6251, National Instruments). Once the applied pressure exceeded the capillary pressure of the membrane pores, liquid penetrated the membranes, leading to a pressure drop. The obtained peak value of the pressure measurement gives the LEP of the tested membrane.

*Gas permeability measurements*

A gas permeability test was employed to analyze the mass transfer resistance of different membranes. The permeation flux of nitrogen through the dry membranes was measured under transmembrane pressures ranging from 10 to 1000 mbar. With increasing transmembrane pressure, the gas flow rate was obtained by using flow sensors with respective ranges (SMC Corp., PFMV5 series). The effective area of the tested membrane was 63 mm$^2$.

EXAMPLE 3

*Enhanced desalination via hierarchical porous membranes*

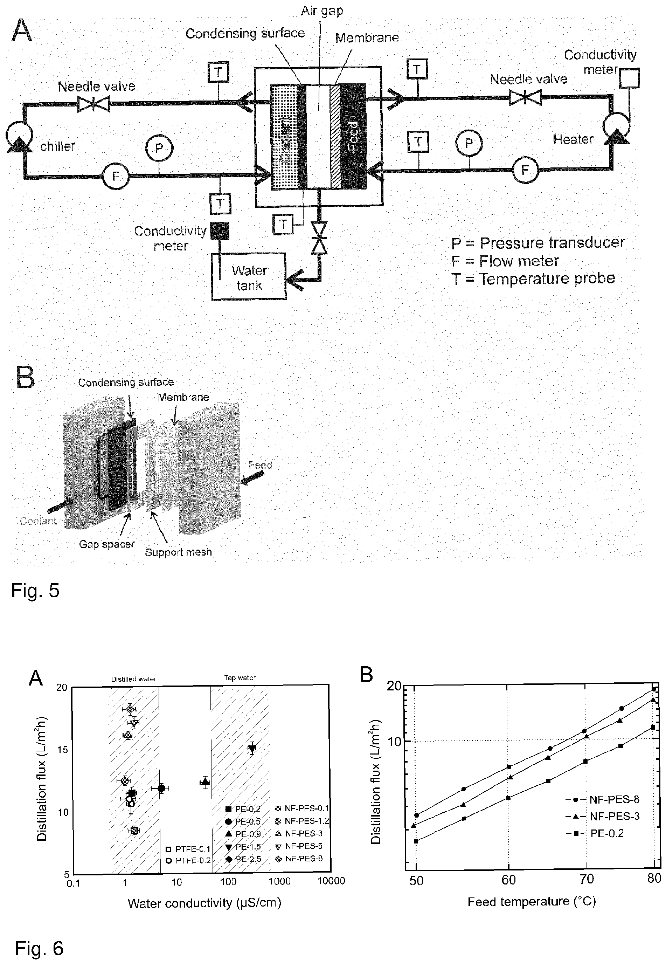

In order to demonstrate the technical potential of exemplary nanofilament-coated PES membranes in water desalination, membrane distillation (MD) experiments were conducted in a custom-made air gap membrane distillation (AGMD) system (Fig. 5A, 5B, see also Detailed in Experimental Procedures). As shown in the schematic drawing of the AGMD module, an air gap was introduced between the membrane and condensing surface, which prevented the membrane from coming into direct contact with the condensed water. The AGMD configuration reduce the conductive heat loss through the membrane, as well as permitting internal latent heat recovery when water condenses on the cooling surface. Owing to the improved thermal efficiency resulting from the air gap and heat recovery, the AGMD process has recently been considered as the first choice for pilot scale testing and future industrial applications.

In said AGMD experiments, nanofilament-coated PES membranes were tested at different feed water temperatures for more than 12 hours. The conductivity of saline feed water $\sigma_f$ in the MD test was stabilized at the level of seawater ($\sigma_f$ = 54.0 $\pm$ 0.5 mS/cm at 25 °C). The weight and conductivity of distillate $\sigma_d$ were continuously monitored over time to characterize the distillation flux and salt rejection rate in the desalination process. For comparison, MD performance of commercial PE and PTFE membranes were assessed as being the benchmark. In the following, PTFE-0.1 and PTFE-0.2 are used to denote the PTFE membranes with nominal pore diameters of $d_n$ = 0.1 and 0.2 $\mu$m, respectively.

Fig. 6A shows the measured flux and conductivity of distilled water for all tested membranes at a feed temperature of 80 °C and a cooling water temperature of 20°C. Flow rates of feed and cooling water were 1.5 and 2 Lmin$^{-1}$, respectively.

The inventors calculated the salt rejection rate by (1 - $\sigma_d/\sigma_f$) $\times$ 100%, where $\sigma_d$ and $\sigma_f$ are conductivity of distillate and feed, respectively. As commonly used membranes in the MD process, hydrophobic PE membranes were able to remove more than 99.9% salt from the feed saline (i.e., $\sigma_d$ < 54 $\mu$S/cm) when the pore diameter was below $d_n \leq 0.9$ $\mu$m. With the increasing pore size, the distillation flux of PE membranes goes up from 11.5 to 17.7 Lm$^{-2}$h$^{-1}$, but the water conductivity rises from 1.1 to 2721 $\mu$S/cm. The decline in salt rejection performance arises from the low wetting resistance of PE membranes with a large pore size (e.g., $d_n$ > 1.5 $\mu$m). Considering the standard conductivity of distilled water (0.5 - 3 $\mu$S/cm), only a PE-0.2 membrane conforms to the acceptance criteria.

In contrast, for all the nanofilament-coated PES membranes, the conductivity of purified water remained low and independent on the membrane pore size and distillation flux. Although the surface tension of feed water decreased from 0.07 N/m at 50 °C to 0.063 N/m at 80°C, the superhydrophobic nanofilament coating maintained high wetting resistance. Even when the nominal membrane pore size was 8 $\mu$m, the NF-PES-8 membrane performed with an excellent salt rejection (>99.995%). Given the substantial increase of distillation flux (18.2 Lm$^{-2}$h$^{-1}$), the hierarchical PES membrane shows significant advantages over the commercial membranes.

To further test the performance of various membranes under different environments, their desalination ability was determined at differing feed water temperatures. Fig. 6B depicts the experimental steady state distillation flux as a function of feed water temperature for NF-PES-8, NF-PES-3 and PE-0.2 membranes. The temperature of the cooling water was kept at 20°C. All tested membranes showed an exponential increase in the distillation flux with increasing feed temperature. This is mainly due to the fact that the driving force of MD (i.e., water vapor pressure) rises exponentially with the feed water temperature ($T_f$). Notably, the NF-PES-8 membrane showed 16% higher increase of distillation flux compared to that of PE-0.2 membrane when $T_f$ increased from 50 to 80 °C. This variance in growth rate highlights that the hierarchical porous structure on NF-PES-8 membrane significantly enhances the vapor transport rate as a result of the higher gas permeability and the larger evaporation area.

Maximizing the thermal efficiency of water production is imperative to the future development and industrialization of MD in terms of the water-energy nexus. The thermal efficiency ($\eta$) of tested MD membranes, defined as the ratio of heat utilized for distillation to the total heat consumption at the feed side, is determined by = $q_d/q_f$. Here, $q_f$ is the total heat transfer rate through the membrane and $q_d$ is vaporization heat transfer rate associated with the distillation flux.

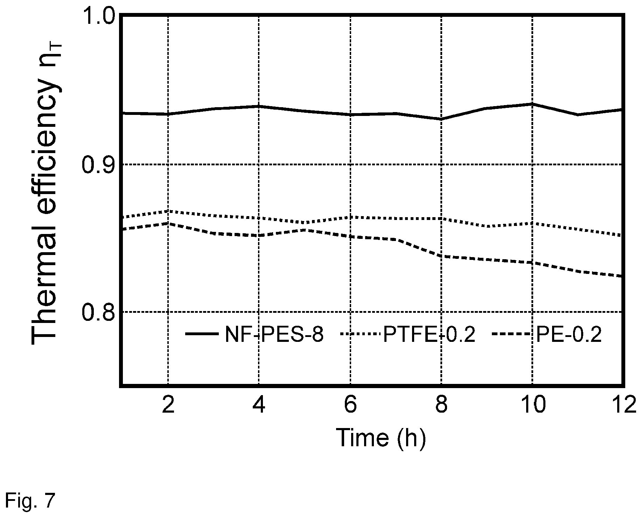

Fig. 7 illustrates the time evolution of thermal efficiency for the NF-PES-8, PE-0.2 and PTFE-0.2 membranes in 12-hour AGMD desalination. Temperatures of feed and cooling water were 80 and 20°C, respectively. Flow rates of feed and cooling water were 1.5 and 2 Lmin$^{-1}$, respectively. The error bands indicate the propagation of error associated with the fluid inlet and outlet temperatures, flow rate and distillate weight measurement.

As shown in Fig. 7, the commercial hydrophobic membranes (e.g., PTFE-0.2 and PE-0.2) were able to purify saline continuously, but with a gradual reduction in thermal efficiency from ~86% to ~82% over 12 hours. In comparison, the NF-PES-8 membrane demonstrated a higher and stable thermal efficiency with $\eta$ = ~93% over 12 hours under same testing conditions, significantly outperforming the PE-0.2 and PTFE-0.2 membranes in a long-term water desalination process.

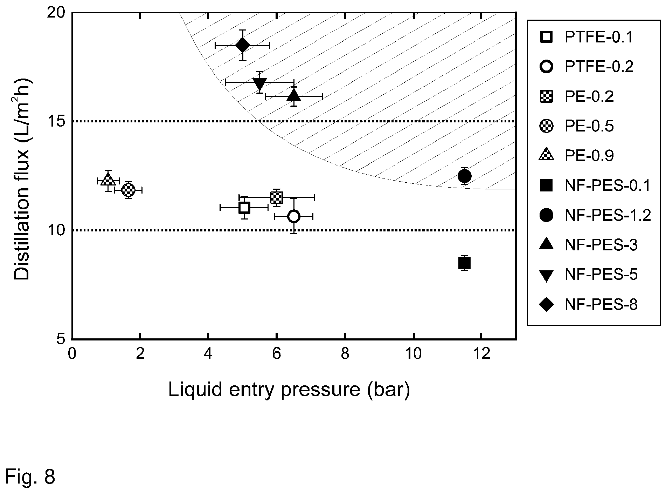

In order to clearly summarize membrane performance for water desalination, a selection of different membranes was rated in a diagram with the two most important parameters: LEP and distillation flux (Fig. 8). Since commercial installation necessitates a large desalination capacity with sufficient salt rejection, the membranes that simultaneously allow high wetting resistance and water production are ideal for the MD process, as highlighted by the hatched area in Fig. 8. With the advantages of multi-scale porous structures, the nanofilament-coated PES membranes apparently strike a better balance between the LEP and distillation flux, as compared to the commercial PE and PTFE membranes. In the most extreme case of the NF-PES-8 membrane, the distillation flux increased by 60% as compared to the commercially available PE-0.2 membrane. Note that despite relative lower distillation flux, the NF-PES-0.1 and NF-PES-1.2 membranes still show great potential for desalination in very harsh conditions. The ultra-high LEP ensures that the membranes are able to withstand extreme hydraulic pressures and will therefore be suitable for application with low-surface-tension fluids such as waste water, mixtures containing organic solvents or compounds, or aqueous solutions with surfactants.

Detailed experimental procedure for membrane distillation tests

Membrane distillation tests were performed using a custom-made AGMD setup, which consisted of AGMD module, feed water and coolant circulating loops, digital balance, conductivity meter, and data acquisition system. The tested membrane was mounted in the AGMD module, between a feed flow channel and a condensing surface. A support mesh (~0.5 mm thick) was used to hold the membrane in a planar shape and reduce the membrane deformation due to the pressure difference between feed flow and air gap. An acrylic spacer was used in the MD module to create the required air gap. The total air gap width between membrane and condensing surface was ~4.5 mm. Feed saline water was heated to the desired temperature and pumped to the AGMD module using a magnetic coupling water pump. The condensing surface temperature was controlled by the coolant flow loop using a refrigerated water bath circulator. When distilled water slid off the condensing surface by gravity, it was collected in a glass flask. A digital balance (SPX 2202, Ohaus) continuously recorded the weight of collected distilled water for determining the distillation flux of tested membranes. The conductivities of feed and distilled water were measured by the conductivity meter for calculating the salt rejection during membrane distillation. Four Pt100 temperature probes (PM-1/10-1/8-6-0-P-3, Omega) were adopted to measure the liquid temperature at inlet and outlet of feed flow channel and coolant flow channel, respectively. Two flow meters (FT110, Gems) and two pressure transducers (IPSLU-M12, RS-Pro) were installed in the pipelines to continuously monitor the flow rate and pressure in the feed and coolant loops. All the sensors in the AGMD testing setup were electrically connected to a data acquisition system, which consisted of two National Instruments (NI) analog input modules (PCI 6251 and NI-9216). The measured data during MD experiments were transferred to the computer, which could be monitored in realtime and stored using a self-written LabView code.

**Claims**

1. A nanofilament-coated membrane with hierarchical porous structures comprising

   - a microporous polymer support membrane having through-going pores with a nominal pore diameter in the range from 0.2 $\mu$m to 50 $\mu$m, preferably 1 $\mu$m to 10 $\mu$m
   - a superhydrophobic fluorine-free nanoporous layer having through-going pores with a nominal pore diameter in the range from 5 nm to 200 nm, preferably 10 nm to 100 nm, provided on said support membrane and comprising or consisting of a porous network of polysiloxane nanofilaments.

2. The nanofilament-coated porous membrane according to claim 1 wherein the microporous support membrane comprises or consists of a polymer which is selected from the group consisting of polyethersulfone (PES), cellulose acetate (CA), polypropylene (PP), polyamide (nylon), polytetrafluoroethylene (PTFE), polyvinyl difluoride (PVDF) or polyethylene (PE).

3. The nanofilament-coated porous membrane according to claim 1 or 2 which has an apparent receding contact angle $\theta_r^{app}$ for water of more than 150°, measured at room temperature, and a roll off angle of less than 10° even after being immersed in hot water of 80°C for 48 h.

4. The nanofilament-coated porous membrane according to any one of claim 1-3 which has a liquid entry pressure LEP of at least 2 bar, preferably at least 5 bar.

5. A method for preparing the nanofilament-coated porous membrane according to any one of claims 1-4 comprising at least the following steps:

   - treatment of a microporous polymer membrane with oxygen plasma or by an oxidizing solution, e.g. Fenton's reagent, to activate the polymer surface
   - immersion of the microporous polymer membrane in a reaction medium comprising trichloromethylsilane or triethoxysilane and trace amounts of water, i.e. 100 ppm to saturation concentration, in an organic solvent, e.g. toluene or a mixture of n-heptane and toluene or other organic solvents for trichloromethylsilane or triethoxysilane that can accommodate above trace amounts of water
   - hydrolysis of trichloromethylsilane or triethoxysilane and generation of silanol functional groups
   - formation of polysiloxane nanofilaments on said membrane surface due to condensation reactions of said silanol functional groups with each other and with hydroxyl groups on the membrane surface, and
   - self-assembling of polysiloxane nanofilaments resulting in a porous network of said polysiloxane nanofilaments.

6. The method according to claim 5, wherein the solvent is a mixture of n-heptane and toluene and the formation and self-assembling of nanofilaments is completed within a predetermined period of time, typically in the range from 10 min to 12 h.

7. Use of the nanofilament-coated porous membrane according to any one of claims 1-4 for membrane distillation.

8. The use according to claim 7 in a process of desalination of saline or distillation of contaminated water or extraction of water from waste water or extraction of other volatile components from a feed solution.

9. A method for extraction of a volatile component from a feed solution, e.g. a saline aqueous medium, comprising at least the following steps:

   - providing a nanofilament-coated porous membrane according to any one claims of claims 1-4,
   - contacting said membrane with a feed solution comprising a volatile component, e.g. saline, at a predetermined elevated temperature resulting in the evaporation and permeation of the volatile component, e.g. water molecules, through said nanofilament-coated porous membrane,
   - condensing the permeated molecules at the opposite side of the membrane, wherein the condensation may occur directly into a stream of permeate contacting the membrane or onto a condensing surface having a predetermined low target temperature and being arranged opposite to said nanofilament-coated porous membrane in a predetermined distance, and
   - collecting the condensed permeate.

10. A device, in particular a membrane distillation device, comprising the nanofilament-coated porous membrane according to any one of claims 1-4.

11. The device according to claim 10 which is a membrane-distillation device and further comprises at least the following components:

   - a supply compartment for receiving an aqueous supply medium with volatile components, e.g. water, and non-volatile compounds, e.g. salts, which is in contact with one surface of the nanofilament-coated porous membrane,
   - means for heating and maintaining the medium within the supply compartment at an elevated target temperature,
   - a condensing surface maintained at a predetermined target temperature below the temperature of the supply compartment and arranged in a predetermined distance from that surface of the nanofilament-coated porous membrane which is not in contact with the supply compartment,
   - means for cooling and maintaining the condensing surface at the target temperature, and
   - means for collecting the distillate, i.e. any volatile components of the supply medium which have permeated the nanofilament-coated porous membrane and condensed at the condensing surface.

Fig. 1

Fig. 2

Fig. 3

Fig. 4

Fig. 5

Fig. 6

Fig. 7

Fig. 8

Europäisches
Patentamt

European
Patent Office

Office européen
des brevets

**EUROPEAN SEARCH REPORT**

Application Number

EP 22 15 0541

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2013/074040 A1 (NGEE ANN POLYTECHNIC [SG]; SINGH GURDEV [SG]; PRINCE JAMES ANTONY [SG]) 23 May 2013 (2013-05-23) | 1-4,7-11 | INV. B01D61/36 B01D67/00 |
| Y | * the whole document * | 5,6 | B01D69/02 B01D69/12 |
| X | WU MINMIN ET AL: "PPy nanotubes-enabled in-situ heating nanofibrous composite membrane for solar-driven membrane distillation", SEPARATION AND PURIFICATION TECHNOLOGY, ELSEVIER SCIENCE, AMSTERDAM, NL, vol. 281, 23 October 2021 (2021-10-23), XP086860697, ISSN: 1383-5866, DOI: 10.1016/J.SEPPUR.2021.119995 [retrieved on 2021-10-23] * the whole document * | 1-4,7-10 | B01D71/70 C02F1/44 |
| X | LIAO YUAN ET AL: "Development of robust and superhydrophobic membranes to mitigate membrane scaling and fouling in membrane distillation", JOURNAL OF MEMBRANE SCIENCE, ELSEVIER BV, NL, vol. 601, 11 February 2020 (2020-02-11), XP086083497, ISSN: 0376-7388, DOI: 10.1016/J.MEMSCI.2020.117962 [retrieved on 2020-02-11] * the whole document * | 1-4,7-10 | |

-/--

TECHNICAL FIELDS SEARCHED (IPC)

B01D
C02F

The present search report has been drawn up for all claims

| Place of search | Date of completion of the search | Examiner |
|---|---|---|
| Munich | 1 April 2022 | Marti, Pedro |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

## EUROPEAN SEARCH REPORT

Application Number

EP 22 15 0541

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | JUNPING ZHANG ET AL: "Superoleophobic Coatings with Ultralow Sliding Angles Based on Silicone Nanofilaments", ANGEWANDTE CHEMIE INTERNATIONAL EDITION, vol. 50, no. 29, 11 July 2011 (2011-07-11), pages 6652-6656, XP055156687, ISSN: 1433-7851, DOI: 10.1002/anie.201101008 * the whole document * | 5,6 | |
| A | ORSOLINI PAOLA ET AL: "Superhydrophobicity of nanofibrillated cellulose materials through polysiloxane nanofilaments", CELLULOSE, SPRINGER NETHERLANDS, NETHERLANDS, vol. 25, no. 2, 26 December 2017 (2017-12-26), pages 1127-1146, XP036430346, ISSN: 0969-0239, DOI: 10.1007/S10570-017-1636-8 [retrieved on 2017-12-26] * the whole document * | 5,6 | |
| A | FRANCIS LIJO ET AL: "Electrospun membranes for membrane distillation: The state of play and recent advances", DESALINATION, ELSEVIER, AMSTERDAM, NL, vol. 526, 3 January 2022 (2022-01-03), XP086933157, ISSN: 0011-9164, DOI: 10.1016/J.DESAL.2021.115511 [retrieved on 2022-01-03] * the whole document * | 1-11 | TECHNICAL FIELDS SEARCHED (IPC) |
| A | WO 2020/056508 A1 (VALORBEC S E C [CA]) 26 March 2020 (2020-03-26) * the whole document * | 1-11 | |

-/--

The present search report has been drawn up for all claims

| Place of search | Date of completion of the search | Examiner |
|---|---|---|
| Munich | 1 April 2022 | Marti, Pedro |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 2 of 3

Europäisches
Patentamt

European
Patent Office

Office européen
des brevets

**EUROPEAN SEARCH REPORT**

Application Number

**EP 22 15 0541**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | WO 2019/115806 A1 (MAX PLANCK GESELLSCHAFT [DE]) 20 June 2019 (2019-06-20) * the whole document * ----- | 1-11 | |
| A | RASTEGARPANAH A ET AL: "Surface treatment of polyethersulfone membranes for applying in desalination by direct contact membrane distillation", DESALINATION, ELSEVIER, AMSTERDAM, NL, vol. 377, 22 September 2015 (2015-09-22), pages 99-107, XP029287217, ISSN: 0011-9164, DOI: 10.1016/J.DESAL.2015.09.008 * the whole document * ----- | 1-11 | |

TECHNICAL FIELDS
SEARCHED      (IPC)

The present search report has been drawn up for all claims

| Place of search | Date of completion of the search | Examiner |
|---|---|---|
| Munich | 1 April 2022 | Marti, Pedro |

CATEGORY OF CITED DOCUMENTS

X : particularly relevant if taken alone
Y : particularly relevant if combined with another
  document of the same category
A : technological background
O : non-written disclosure
P : intermediate document

T : theory or principle underlying the invention
E : earlier patent document, but published on, or
  after the filing date
D : document cited in the application
L : document cited for other reasons

& : member of the same patent family, corresponding
  document

EPO FORM 1503 03.82 (P04C01)

page 3 of 3

## ANNEX TO THE EUROPEAN SEARCH REPORT
## ON EUROPEAN PATENT APPLICATION NO.

EP 22 15 0541

This annex lists the patent family members relating to the patent documents cited in the above-mentioned European search report.
The members are as contained in the European Patent Office EDP file on
The European Patent Office is in no way liable for these particulars which are merely given for the purpose of information.

01-04-2022

| Patent document cited in search report | | Publication date | Patent family member(s) | | Publication date |
|---|---|---|---|---|---|
| WO 2013074040 | A1 | 23-05-2013 | CN | 103998115 A | 20-08-2014 |
| | | | SG | 11201402157X A | 27-06-2014 |
| | | | US | 2014326658 A1 | 06-11-2014 |
| | | | WO | 2013074040 A1 | 23-05-2013 |
| WO 2020056508 | A1 | 26-03-2020 | CA | 3112943 A1 | 26-03-2020 |
| | | | EP | 3852906 A1 | 28-07-2021 |
| | | | US | 2022008867 A1 | 13-01-2022 |
| | | | WO | 2020056508 A1 | 26-03-2020 |
| WO 2019115806 | A1 | 20-06-2019 | EP | 3498384 A1 | 19-06-2019 |
| | | | WO | 2019115806 A1 | 20-06-2019 |

EPO FORM P0459

# EP 4 209 261 A1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **GONZALEZ ; SUAREZ.** *Renewable and Sustainable Energy Reviews,* 2017, vol. 80, 238-259
- **ALI et al.** *Renewable and Sustainable Energy Reviews,* 2018, vol. 81, 1-21
- **DESMUKK et al.** *Energy & Environmental Science,* 2018, vol. 11, 1177-1196
- **HUSSAIN et al.** *Emergent Materials,* 2021, https://doi.org/10.1007/s42247-020-00152-8
- **JIANG et al.** *ACS Nano,* 2020, vol. 14, 17376-17386
- **SEO et al.** *Nature Communications,* 2018, vol. 9, 683
- **WANG et al.** *Environmental Science & Technology,* 2016, vol. 50, 3866-3874
- **DENG et al.** *Journal of Membrane Science,* 2020, vol. 598, 117813
- **SUN et al.** *Advanced Functional Materials,* 2019, vol. 29, 1903125